Europäisches Patentamt

European Patent Office

Office européen des brevets

(19)

(11) **EP 0 960 409 B1**

(12) **EUROPÄISCHE PATENTSCHRIFT**

(45) Veröffentlichungstag und Bekanntmachung des Hinweises auf die Patenterteilung:
**28.11.2001  Patentblatt 2001/48**

(21) Anmeldenummer: **98905358.2**

(22) Anmeldetag: **27.01.1998**

(51) Int Cl.⁷: $G08C\ 15/00$, $H04L\ 25/38$

(86) Internationale Anmeldenummer:
**PCT/EP98/00435**

(87) Internationale Veröffentlichungsnummer:
**WO 98/35329 (13.08.1998 Gazette 1998/32)**

(54) **VERFAHREN ZUR UEBERTRAGUNG VON DATEN IN PULSPAUSEN EINES DREHZAHLSIGNALS UND SCHALTUNGSANORDNUNG ZUR DURCHFUEHRUNG DES VERFAHRENS**

METHOD FOR TRANSMITTING DATA DURING PULSE INTERVALS OF A SPEED SIGNAL, AND CIRCUIT FOR CARRYING OUT SAID METHOD

PROCEDE POUR TRANSMETTRE DES DONNEES DURANT DES PAUSES ENTRE IMPULSIONS D'UN SIGNAL DE VITESSE ET CIRCUIT POUR METTRE LEDIT PROCEDE EN OEUVRE

(84) Benannte Vertragsstaaten:
**DE FR GB**

(30) Priorität: **11.02.1997  DE 19705063**
**05.04.1997  DE 19714152**

(43) Veröffentlichungstag der Anmeldung:
**01.12.1999  Patentblatt 1999/48**

(73) Patentinhaber: **Continental Teves AG & Co. oHG**
**60488 Frankfurt (DE)**

(72) Erfinder:
• **ZINKE, Olaf**
**D-81669 München (DE)**
• **FEY, Wolfgang**
**D-65527 Niedernhausen (DE)**
• **LORECK, Heinz**
**D-65510 Idstein (DE)**

(74) Vertreter: **Blum, Klaus-Dieter**
**Continental Teves AG & Co. oHG,**
**Guerickestrasse 7**
**60488 Frankfurt (DE)**

(56) Entgegenhaltungen:
WO-A-95/17680          DE-A- 2 242 639
DE-C- 4 323 619        US-A- 5 434 891

**Beschreibung**

Die Erfindung betrifft ein Verfahren zur Übertragung von Daten in Pulspausen eines Drehzahlsignales, wobei die maximale Anzahl der übertragbaren Daten aus der Zeitdauer ermittelt wird, die für die Übertragung einer Information benötigt wird sowie aus einer Zeit, die der Länge der Pulspause entspricht.

Ebenso betrifft die Erfindung eine Schaltungsanordnung zur Durchführung des Verfahrens.

Aus der nicht vorveröffentlichten Anmeldung mit der Nummer DE 196 50 935.1 (P 8887) ist bereits ein derartiges Verfahren bekannt, bei dem von einem Drehzahlsensor Signalpulse gesendet werden. Anhand der zeitlichen Abfolge dieser Signalpulse wird die Raddrehzahl ermittelt. In den Pulspausen werden weitere Daten übertragen. Diese Daten können beispielsweise die Fahrtrichtung symbolisieren, den Luftdruck im Reifen, den Bremsbelagverschleiß oder andere Größen, die von Sensoren am Rad erfaßt werden. Ein Verfahren, das für einen Abfrogezyklus derartiger weiterer Daten geeignet ist ist in DE-C-43 23 619 offenbart. Die Daten werden durch binäre Signale übertragen. Die Signalpegel der Signalpulse des Drehzahlsensors unterscheiden sich von den Signalpegeln bei der Datenübertragung, um das fahrsicherheitsrelevante Drehzahlsignal sicher von den anderen Daten unterscheiden zu können. Das Drehzahlsignal darf durch die anderen Daten nicht gestört werden. Bei dem Gegenstand der Anmeldung wird die Datenübertragung durch einen Signalpuls des Drehzahlsensors ausgelöst. Die Anzahl der übertragbaren Daten wird bei diesem Verfahren anhand der Dauer der Übertragung einer einzelnen Information sowie der zur Verfügung stehenden Zeit in einer Pulspause festgelegt. Dabei ist die maximale Anzahl der übertragbaren Daten so festzulegen, daß bei einer Dauer der Pulspause, die der Maximalgeschwindigkeit des Fahrzeuges entspricht, die Übertragung der Daten abgeschlossen ist bevor der nächste Signalpuls des Drehzahlsignales auftritt.

Es ist Aufgabe der vorliegenden Erfindung, diese Datenübertragung zu verbessern.

Erfindungsgemäß wird diese Aufgabe gelöst, indem die maximale Anzahl der in einer Pulspause übertragbaren Daten adaptiert wird, indem als Zeit, die der Länge der Pulspause entspricht, ein Wert angesetzt wird, der sich aus wenigstens einer gerade gemessenen Pulspause unter Berücksichtigung eines Maximalwertes der Radbeschleunigung ergibt.

Die Anzahl der in einer Pulspause übertragbaren Daten wird also in Abhängigkeit von der Fahrgeschwindigkeit angepaßt. Dadurch ist es beispielsweise möglich; im Bereich niedrigerer Geschwindigkeit des Fahrzeuges eine größere Anzahl von Daten zu übertragen. Die Auslegung des Protokolles hinsichtlich der Anzahl der übertragbaren Daten unterliegt damit nur geringeren Beschränkungen.

Bei dem Verfahren nach Anspruch 2 werden in einer Pulspause zuerst die Daten übertragen, die bei hohen Geschwindigkeiten relevant sind.

Wenn also nicht alle Daten übertagen werden können, weil die Signalpulse des Drehzahlsiganles zu dicht aufeinander folgen, sind trotzdem die Daten verfügbar, die bei hohen Geschwindigkeiten relevant sind. Daten, von deren Übertragung bei hohen Geschwindigkeiten abgesehen werden kann, sind beispielsweise die Information über eine Vorwärts- und Rückwärtsfahrt, weil zunächst die Fahrgeschwindigkeit verringert werden muß bevor eine Fahrtrichtungsumkehr stattfinden kann. Eventuell kann bei hohen Fahrgeschwindigkeiten auch von einer Übertragung der Information über den Bremsbelagverschleiß abgesehen werden. Der Bremsbelagverschleiß geht normalerweise nur vergleichsweise langsam vonstatten, so daß mit einer gelegentlichen Reduzierung der Fahrgeschwindigkeit - fahrsituationsabhängig oder beim Tanken oder Rasten - eine hinreichende Häufigkeit der Übertragung dieser Information gegeben ist. Hingegen wird der Luftdruck des Reifens eher zu den wichtigen Informationen gehören, die auch bei hohen Fahrgeschwindigkeiten übertragen werden sollten.

Bei dem Verfahren nach Anspruch 3 wird die maximale Anzahl der in einer Pulspause übertragenen Daten so adaptiert, daß die Datenübertragung beendet ist, wenn der nächste Signalpuls des Drehzahlsignales auftritt.

Vorteilhaft zeigt sich dabei, daß kein Zeitversatz beim Überschreiten des Schwellwertes des Signalpegels des Drehzahlsignales auftritt in Abhängigkeit davon, ob der Signalpegel der Datenübertragung "0" oder "1" war.

Bei dem Verfahren nach Anspruch 4 wird ein Protokoll der zu übertragenden Daten erstellt, wobei eine Adaption der maximalen Anzahl der Daten erfolgt, indem einzelne oder mehrere Daten aus dem Protokoll weggelassen werden, und wobei zu jeder möglichen Anzahl der zu übertragenden Daten eine Mindestdauer wenigstens einer vorausgegangenen Pulspause ermittelt wird, um diese Anzahl Daten übertragen zu können, und wobei anhand der festgestellten Dauer der wenigstens einen vorausgegangenen Pulspause ermittelt wird, wie viele Daten maximal übertragen werden können.

Dabei zeigt sich, daß vergleichsweise einfach und ohne großen Aufwand in Echtzeit feststellbar ist, wieviele Daten übertragen werden können.

Bei dem Verfahren wird vorteilhaft die Datenübertragung von einem Signalpuls des Drehzahlsignales abgebrochen, wenn die Zeitdauer der Datenübertragung so lang ist, daß bereits der nächste Signalpuls des Drehzahlsignales vorliegt. Vorteilhaft wird bei der Auswertung des Drehzahlsignales berücksichtigt, ob die bei dem Auftreten des Signalpulses des Drehzahlsignales abgebrochene Information den Wert "0" oder "1" hatte.

Vorteilhaft zeigt sich dabei, daß noch möglichst viele Daten übertragen werden können. Die Übertragung der Daten wird erst dann beendet, wenn dies tatsächlich notwendig ist. Die Höhe des Signalpegels bei Abbruch der Datenverarbeitung läßt Rückschlüsse auf den Zeitversatz zu, mit dem der entsprechende Schwellwert des Drehzahlsignales überschritten wird.

Bei einer Schaltungsanordnung nach Anspruch 5 wird zur Messung der wenigstens einen Pulspause einem Zähler ein Signal eines Oszillators und ein weiteres Signal zugeführt wird, wobei das weitere Signal das Auftreten eines Signalpulses des Drehzahlsignales repräsentiert.

Dadurch kann zum einen die Länge der Pulspause einfach festgestellt werden. Außerdem kann anhand dieser Pulspause und der Tabelle einfach festgestellt werden, wieviele Daten sicher übertragen werden können.

Ein Ausführungsbeispiel der Erfindung ist in der Zeichnung dargestellt. Es zeigt dabei im einzelnen:

Fig. 1: eine Darstellung des Zeitverlaufes des Signalpegels bei einer Datenübertragung in Pulspausen,

Fig. 2: eine Darstellung des Zeitverlaufes des Signalpegels bei einer Datenübertragung in Pulspausen, wobei das Bit mit der Nummer 2 abgebrochen wird,

Fig. 3: eine Darstellung des Zeitverlaufes, mit der der Schwellwert des Signalpulses des Drehzahlsignales erkannt wird,

Fig. 4: eine Prinzipdarstellung einer Schaltungsanordnung zur Durchführung des Verfahrens.

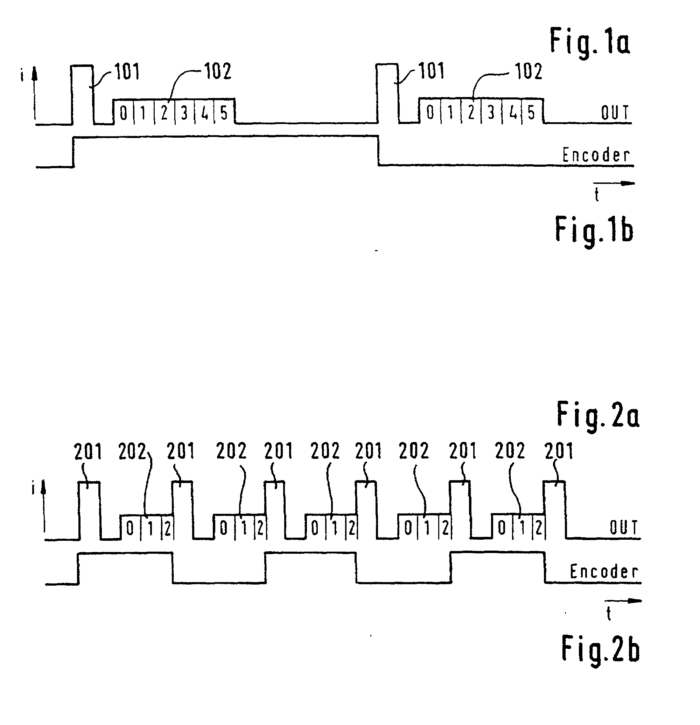

Figur 1 zeigt eine Darstellung des Signalpegels bei einer Datenübertragung in Pulspausen. Wie Figur 1 a zu entnehmen ist, ist der Signalpegel des Signalpulses des Drehzahlsignales 101 größer als der Signalpegel bei der Datenübertragung 102. Dadurch kann der Signalpuls des Drehzahlsignales von Signalpulsen der Datenübertragung unterschieden werden, so daß es nicht zu Störungen bei der Übertragung des Drehzahl wegen der Übertragung anderer Daten kommen kann. Figur 1 b zeigt den zugehörigen Signalverlauf des Encoders, der den Signalpegel jedesmal bei einer ansteigenden Flanke des Signalpulses des Drehzahlsignales wechselt. In dem gezeigten Ausführungsbeispiel werden in der Pause zwischen zwei Signalpulsen 101 des Drehzahlsignales Daten in den Datenbits mit den Nummern 0 bis 5 übertragen.

Figur 2 zeigt die Übertragung von Signalpulsen eines Drehzahlsignales 201, wobei in den Pausen zwischen Signalpulsen 201 wiederum Daten 202 übertragen werden. Wie Figur 2a zu entnehmen ist, wird die Übertragung der Daten dabei bereits bei dem Datenbit mit der Nummer 2 abgebrochen. Dies liegt daran, daß wegen der hohen Fahrzeuggeschwindigkeit die zeitliche Abfolge der Signalpulse 201 des Drehzahlsignales so dicht ist, daß für die vollständige Übertragung aller Datenbits nicht genügend Zeit bleibt.

Vorteilhaft werden die Daten bei der Übertragung so sortiert, daß die Daten, die laufend bzw. besonders bei hohen Geschwindigkeiten wichtig sind, in den "vorderen" Datenbits angeordnet sind, so daß diese Informationen auch bei höheren Fahrzeuggeschwindgikeiten übertragen werden. In den "hinteren" Datenbits können dann Informationen übertragen werden, deren Übertragung in größeren Zeitabständen toleriert werden kann (wie beispielsweise die Bremsbelagverschleißanzeige) oder Daten, die sich bei hohen Geschwindigkeiten ohnehin nicht ändern können wie beispielsweise die Information über eine Vorwärts- oder Rückwärtsfahrt.

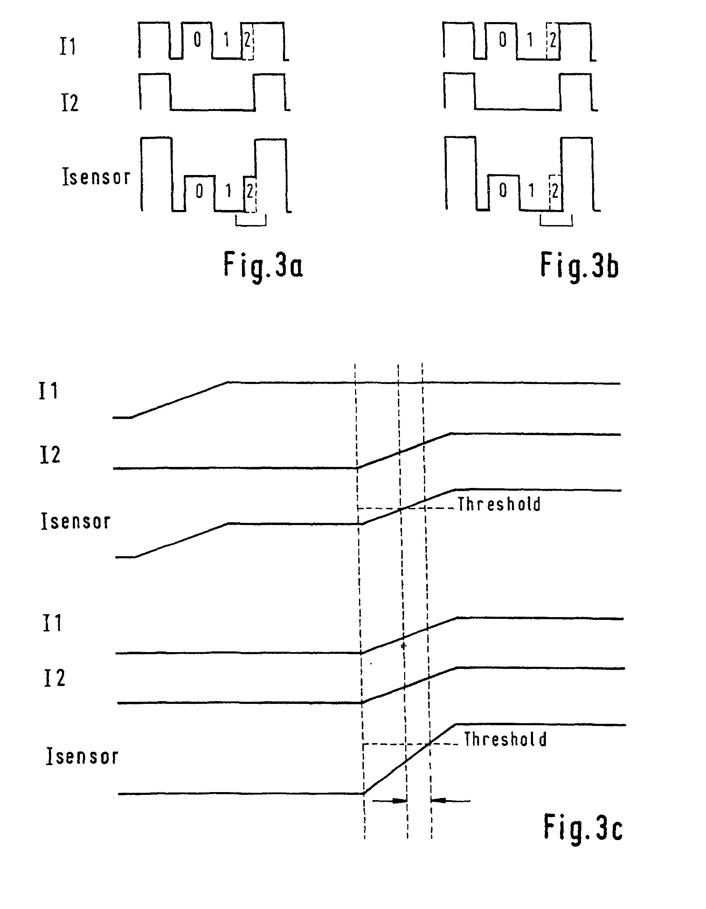

Figur 3 zeigt eine Darstellung des Zeitverlaufes, mit der der Schwellwert des Signalpulses des Drehzahlsignales erkannt wird.

Die Darstellung der Kurven mit den senkrechten Flanken betrifft in der Darstellung von oben nach unten den Signalpegel bei der Datenübertragung (Stromquelle I1), den Signalpegel des Drehzahlsignales (Stromquelle I2 zusätzlich zur Stromquelle I1) und den sich einstellenden kombinierten Signalpegel (Isensor).

Figur 3a zeigt die Verhältnisse, wenn bei einem Signalpuls des Drehzahlsignales bei der Datenübertragung der Signalpegel auf "1" ist. Fig. 3b zeigt die Verhältnisse, wenn bei einem Signalpuls des Drehzahlsignales bei der Datenübertragung der Signalpegel auf "0" ist.

Aufgrund des nicht idealen Verhaltens der Bauteile sowie der Begrenzung der Schaltflanken wegen der HF-Abstrahlung erfolgen die Sprünge der Signalpegel bei einem Schalten der entsprechenden Stromquellen nicht senkrecht sondern mit einem gewissen zeitlichen Anstieg.

Ein Wechsel des Signalpegels des Encoders findet statt, wenn der Signalpegel des Sensors den Schwellwert überschreitet. Dies kann nur dann passieren, wenn ein Signalpuls des Drehzahlsignales vorliegt, das heißt, wenn beide Stromquellen zugeschaltet sind.

Wie Figur 3c zu entnehmen, erfolgen die Wechsel der Signalpegel aber nicht senkrecht sondern mit einer gewissen Anstiegszeit. Die Zeit vom Beginn eines Wechsels des Signalpegels des Drehzahlsignales bis zum Überschreiten des Schwellwertes hängt also von dem "Startwert" des Signalpegels des Drehzahlsignales ab. Dadurch bedingt kommt es zu einer Abhängigkeit davon, ob bei der Datenübertragung der Signalpegel der Datenübertragung beim Abbruch der Datenübertragung, d.h. beim Beginn des Signalpulses des Drehzahlsignales, gerade bei "0" lag (wie in Figur 3a dargestellt) oder bei "1" (wie in Figur 3b dargestellt).

Wenn der Signalpegel der Datenübertragung bei "1" lag, überschreitet der Signalpegel bei einem Signalpuls des Drehzahlsignales zeitlich entsprechend vorgezogen den Schwellwert. Dies ist der Darstellung der drei oberen Diagramme der Figur 3c zu entnehmen, in denen die Verhältnisse der Figur 3a dargestellt sind. Weil der fließende Strom Isensor bereits einen Wert größer als 0 aufweist beim Beginn des Signalpulses des Drehzahlsignales wird der Schwellwert entsprechend früher überschritten.

Die drei unteren Diagramme der Figur 3c zeigen die Verhältnisse der Figur 3b. Dort steigt der Wert des Stromes Isensor von 0 aus an, weswegen die Anstiegszeit bis zum Überschreiten des Schwellwertes entsprechend größer ist.

Die sich einstellende Zeitverschiebung ist in Figur 3 c unten durch Pfeile markiert.

Vorteilhaft wird also bei der Auswertung des Drehzahlsignales unterschieden, ob der Signalpegel der Datenübertragung beim Abbruch der Datenübertragung durch das Drehzahlsignal bei "0" oder bei "1" lag. Lag dieser Signalpegel bei "1", wird vorteilhaft berücksichtigt, daß das Überschreiten des Schwellwertes zeitlich vorgezogen erfolgte. Dieser zeitliche Verzug kann abgeschätzt werden aus dem zeitlichen Anstieg des Signales, der wiederum wesentlich von den verwendeten Bauteilen und deren Güte abhängt, und der Höhe des Signalpegels bei der Datenübertragung.

Alternativ zu dieser Berücksichtigung, ob beim Abbruch der Datenübertragung der Signalpegel der Datenübertragung bei "0" oder bei "1" lag, kann auch abgeschätzt werden, wieviele Daten übertragbar sind. Diese maximale Anzahl von Daten kann ermittelt werden aus der Fahrzeuggeschwindigkeit, d.h. dem bisherigen Abstand zwischen zwei Signalpulsen des Drehzahlsignales und einem maximalen Wert der Beschleunigung. Es werden dann nur soviele Daten übertragen, wie sicher in der Pulspause zwischen den Signalpulsen des Drehzahlsignales übertragen werden können. Dadurch ist zumindest weitgehend sichergestellt, daß der Signalpegel bei einem Signalpuls des Drehzahlsignales nicht wegen einer Datenübertragung bei "1" liegt.

Das Tastverhältnis des Encodersignales ist nicht exakt 1:1. Als Bewertungsgrundlage dient daher für eine Pulspause n daher eigentlich die Pulspause (n-2). Zur Vereinfachung der Darstellung wird in der folgenden Beschreibung aber die Länge der Pulspause n in Abhängigkeit von der Pulspause (n-1) dargestellt.

Die Länge des aktuellen Zeitfensters n entspricht bei gleichbleibender Geschwindigkeit etwa der Länge eines vorausgehenden Zeitfensters n-1. Findet nun eine Radbeschleunigung statt, so verkürzt sich die Breite des Zeitfensters um einen dem Beschleunigungswert entsprechenden Betrag. Da dieser Beschleunigungswert nicht vorhersehbar ist, muß der maximal mögliche Beschleunigungswert eingesetzt werden, um auch den ungünstigsten Fall noch sicher zu erfassen. Dieser maximal mögliche Beschleunigungswert kann anhand von Plausibilitätsbetrachtungen festgelegt werden. Üblicherweise ist dieser maximale Beschleunigungswert geschwindigkeitsunabhängig.

Aufgrund dieses geschwindigkeitsunabhängigen festen Beschleunigungswertes ergibt sich für jede Ausgangsgeschwindigkeit (bzw. dazugehörige Signalperiodendauer) eine unterschiedliche Variation der Signalperiodendauer. Eine Abschätzung für diese Signalperiodendauer soll im folgenden dargelegt werden.

Bezeichnungen:

$a\_max$: maximaler Beschleunigungswert (oberhalb dieses Wertes wird eine zeitliche Verschiebung infolge der abgebrochenen Datenübertragung gegebenenfalls in Kauf genommen)

$K\_vF$: Umrechnungsfaktor von Geschwindigkeit auf Frequenz $K\_vF = f / v$

$v\_0$: Ausgangsgeschwindigkeit

$T\_0$: zu $v\_0$ gehörende Signalperiodendauer

$v\_1$: Geschwindigkeit nach der Beschleunigung

$T\_1$: zu $v\_1$ gehörende Signalperiodendauer.

$$T\_0 = 1 / (v\_0 * K\_vF)$$

$$v = v\_1 - v\_0 = a\_max * T\_0$$

$$T = T\_1 - T\_0$$

$$v\_1 = v\_0 + a\_max * T\_0$$

$$T\_1 = 1 / (v\_1 * K\_vF) = 1 / ((v\_0 + a\_max * T\_0) * K\_vF)$$

Ersetzen von v_0 führt zu:

$$T\_1 = 1 / ( ( 1 / (T\_0 * K\_vF) + a\_max * T\_0 ) * K\_vF )$$

$$T\_1 = T\_0 / (1 + a\_max * T\_02 * K\_vF)$$

Für T folgt daraus:

$$T = T\_0 * ( 1 / ( 1 + a\_max * T\_02 * K\_vF ) -1 )$$

Wegen der Definition der Periodendauer des Encoders muß diese Periodendauer halbiert werden, um die Länge der Pulspause zwischen zwei Signalpulsen des Drehzahlsignalgebers zu erhalten.
Es folgt also:

$$t\_(n) = 2 * t\_(n-1)/(2 *(1 + a\_max *( 2 * t\_(n-1))2 * K\_vF ))$$

$$t\_(n) = t\_(n-1) /(1 + 4 * a\_max * (t\_(n-1))2 * K\_vF)$$

mit

t_p:    Zeitdauer des Signalpulses des Drehzahlsignales incl. Pausenzeit nach dem Signalpuls
t_d:    Zeitdauer eines Datenpulses (1 Bit)

erhält man die Anzahl n_d möglicher Datenpulse in der Pulspause t_n:

$$n\_d = integer ((t\_n - t\_p)/t\_d ).$$

Es besteht die Möglichkeit, für jede Pulspause die maximale Anzahl der noch sicher übertragbaren Daten zu ermitteln. Vorteilhaft verringert sich jedoch der Schaltungsaufwand, wenn zu jeder denkbaren Anzahl von zu übertragenden Daten in einer Tabelle eine bestimmte Mindestdauer wenigstens eines vorhergehenden Zeintintervalles festgelegt wird. Im laufenden Betrieb genügt dann die Messung des Zeitintervalles zwischen zwei Signalpulsen des Drehzahlsignals, um aus der Tabelle zu ermitteln, wieviele Daten sicher übertragen werden können.
Zum Erstellen einer solchen Tabelle gilt die Beziehung:

$$n\_d = (t\_n - t\_p) / t\_d$$

$$n\_d * t\_d = t\_(n-1) * (1+4*a\_max * (t\_(n-1))2 * K\_vF)- t\_p$$

mit A = n_d * t_d + t_p gilt:

$$4 * A * a\_max * (t\_(n-1))2 * K\_vF - t\_(n-1) + A = 0 \ (t\_(n-1))2 - 1/(4 * A * a\_max * K\_vF) * t\_(n-1)$$

$$+ 1/(4 * a\_max * K\_vF) = 0$$

Aus dieser quadratischen Gleichung ergibt sich als relevante Lösung:

$$t\_(n-1) = 1 /(8*A*a\_max*K\_vF) - \sqrt{1/(64*A^2*(a\_max)^2*(K\_vF)^2)} - 1 /(4*a\_max*K\_vF)$$

Mit Hilfe dieser Gleichung läßt sich für jede Anzahl zu übertragender Daten eine Mindestdauer t_(n-1) der Pulspause zwischen zwei vorausgegangenen Signalpulsen des Drehzahlsignales ermitteln.

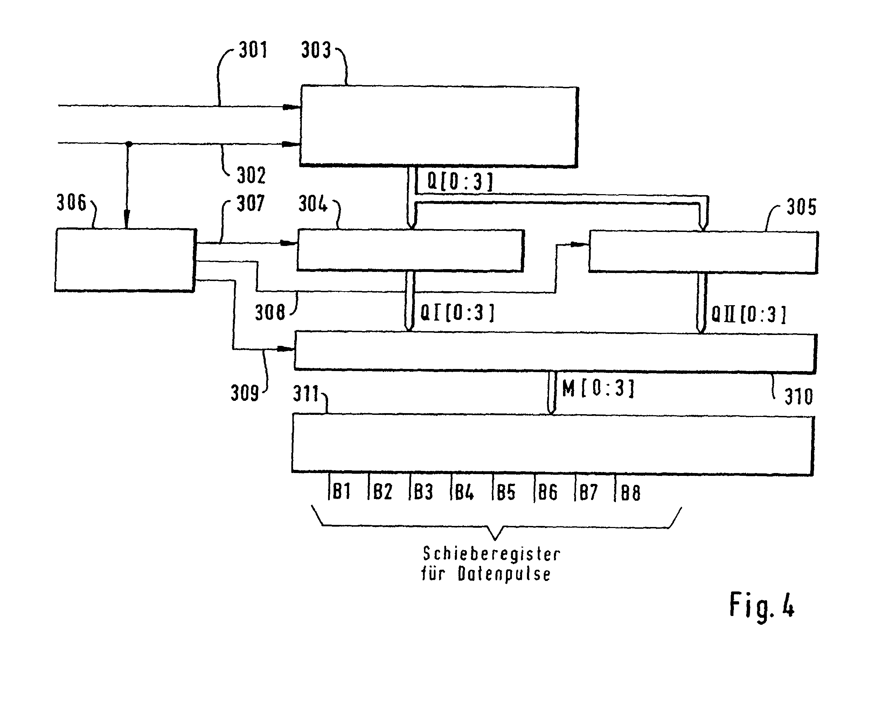

Figur 4 zeigt eine Prinzipdarstellung einer Schaltungsanordnung, mittels der die maximale Anzahl der sicher übertragbaren Daten bestimmt werden kann. Die Länge des Zeitintervalles t_(n-1) wird mittels eines Oszillators und eines Frequenzzählers bestimmt. Es kann dann einem bestimmten Zählstand des Frequenzzählers eine bestimmte maximale Anzahl von Daten zugeordnet werden, die sicher übertragen werden können.

In dem gezeigten Ausführungsbeispiel wird jeweils aus der vorletzten Intervallänge auf die maximale Anzahl von übertragbaren Daten geschlossen.

Das Signal 301 eines Oszillators und ein Signal 302, das das Auftreten eines Signalpulses des Drehzahlsignales repräsentiert, wird einem Zähler 303 zugeführt. Der binäre Zählstand des Zählers 303 wird abwechselnd in einen der beiden Binärspeicher 304 und 305 geladen. Mit der Steuereinrichtung 306 werden die Ladesignale 307 und 308 für die beiden Binärspeicher 304 und 305 erzeugt, so daß zum richtigen Zeitpunkt der Zählstand in dem jeweils richtigen Binärspeicher 304 und 305 aktualisiert wird. Weiterhin erzeugt die Steuereinrichtung 306 ein Signal 309, das über den Multiplexer 310 veranlaßt, daß im Binärspeicher 304 oder 305 befindlichen Daten an den Dekoder 311 weitergegeben werden. Im Dekoder 311 selbst wird dann entsprechend dem binären Wert nach obigen Angaben die maximale Anzahl der übertragbaren Daten ermittelt. Einem bestimmten minimalen Binärwert des Wortes entspricht die Freigabe einer bestimmten Anzahl von Daten. Die Signale B1 --- B8 werden entsprechend auf "1" gesetzt, wenn die Übertragung des jeweiligen Datenbits erlaubt ist. Die Signale B1 ... B8 bewirken im Schieberegister, daß nur diejenigen Datenbits auf "1" geladen werden können, für die eine Datenübertragung erlaubt ist.

Die Sensorsignal-Auswertung muß ebenfalls eine spezielle Vorrichtung enthalten, um die weggelassenen Datenbits nicht fälschlicherweise als auf "0" gesetzt zu interpretieren. Dazu kann die gleiche Schaltung implementiert werden. Auf diese Art und Weise "weiß" die Auswerteschaltung, wieviele Datenbits der Sensor senden wird. Dies ist möglich, da dem Sensor und der Signalauswerteschaltung die gleichen Entscheidungskriterien zur Verfügung stehen. Problematisch ist allerdings, daß beide Schaltungen ihren Zeittakt von den Taktfrequenzen unterschiedlicher Oszillatoren ableiten. Aus diesem Grund muß in der Auswerteschaltung auch in dieser Hinsicht (also nicht nur Bestimmung der Breite der Datenpulse) eine Adaption auf die Länge des Synchronisationspulses erfolgen, oder aber die in beiden Schaltungen vorhandenen Dekoder werden in der Art und Weise unterschiedlich ausgelegt, daß die Schaltung im Empfänger sich hinsichtlich der erlaubten Anzahl von Datenbits kritischer entscheidet. Das heißt, es muß in diesem Fall gewährleistet sein, daß der Empfänger sich früher für das Weglassen eines Datenbits (bzw. die Nichtauswertung eines Datenbits) entscheidet als die Schaltung im Sensor. Die Phasenshift, die Genauigkeit und die Stabilität der beiden unabhängigen Oszillatoren ist dabei zu berücksichtigen.

Grundsätzlich ist es auch möglich, zu Beginn der Datenübertragung in der Pulspause eine Information zu übertragen, wieviele Daten gesendet werden.

## Patentansprüche

1. Verfahren zur Übertragung von Daten in Pulspausen eines Drehzahlsignales, wobei die maximale Anzahl der übertragbaren Daten aus der Zeitdauer ermittelt wird, die für die Übertragung einer Information benötigt wird sowie aus einer Zeit, die der Länge der Pulspause entspricht,
**dadurch gekennzeichnet, daß** die maximale Anzahl der in einer Pulspause übertragbaren Daten adaptiert wird, indem als Zeit, die der Länge der Pulspause entspricht, ein Wert angesetzt wird, der sich aus wenigstens einer gerade gemessenen Pulspause unter Berücksichtigung eines Maximalwertes der Beschleunigung ergibt (101, 102, 302, 303).

2. Verfahren nach Anspruch 1,
**dadurch gekennzeichnet, daß** in einer Pulspause zuerst die Daten übertragen werden, die bei hohen Geschwindigkeiten relevant sind.

3. Verfahren nach einem der Ansprüche 1 oder 2,
**dadurch gekennzeichnet, daß** die maximale Anzahl der in einer Pulspause übertragenen Daten so adaptiert wird, daß die Datenübertragung beendet ist, wenn der nächste Signalpuls des Drehzahlsignales auftritt.

4. Verfahren nach Anspruch 3,
**dadurch gekennzeichnet, daß** in einem Protokoll der zu übertragenden Daten eine Adaption der maximalen Anzahl der Daten erfolgt, indem einzelne oder mehrere Daten aus dem Protokoll weggelassen werden, daß zu jeder möglichen Anzahl der zu übertragenden Daten eine Mindestdauer wenigstens einer vorausgegangenen Pulspause ermittelt wird, um diese Anzahl Daten übertragen zu können, und daß anhand der festgestellten Dauer der wenigstens einen vorausgegangenen Pulspause ermittelt wird, wie viele Daten maximal übertragen werden können (310, 311).

**5.** Schaltungsanordnung zur Durchführung eines der Verfahren nach einem der Ansprüche 1 bis 4, **dadurch gekennzeichnet, daß** zur Messung der wenigstens einen Pulspause einem Zähler (303) ein Signal eines Oszillators (301) und ein weiteres Signal (302) zugeführt wird, wobei das weitere Signal (302) das Auftreten eines Signalpulses des Drehzahlsignales repräsentiert.

**Claims**

**1.** Method of transmitting data in pulse pauses of a rotational speed signal, wherein the maximum number of the transmittable data is determined from the period of time which is required for transmitting an information and from a time which corresponds to the length of the pulse pause, **characterized in that** the maximum number of the data transmittable in a pulse pause is adapted by setting as time, which corresponds to the length of the pulse pause, a value that results from at least one recently measured pulse pause in consideration of a maximum value of the acceleration (101, 102, 302, 303).

**2.** Method as claimed in claim 1, **characterized in that** first of all those data are transmitted in a pulse pause which are relevant at high speeds.

**3.** Method as claimed in any one of claims 1 or 2, **characterized in that** the maximum number of the data transmitted in a pulse pause is adapted so that the data transmission is terminated as soon as the next signal pulse of the rotational speed signal appears.

**4.** Method as claimed in claim 3, **characterized in that** an adaption of the maximum number of data is effected in a protocol of the data being transmitted by omitting individual or several data from the protocol, **in that** a minimum duration of at least one preceding pulse pause is determined with respect to any possible number of data being transmitted in order to transmit this number of data, and **in that** it is determined by way of the established duration of at least one preceding pulse pause how many data may be. transmitted as a maximum (310, 311).

**5.** Circuit arrangement for implementing one of the methods as claimed in any one of claims 1 to 4, **characterized in that** a signal of an oscillator (301) and a second signal (302) are sent to a counter (303) in order to measure the at least one pulse pause, and the second signal (302) represents the appearance of a signal pulse of the rotational speed signal.

**Revendications**

**1.** Procédé de transmission de données dans des intervalles entre impulsions d'un signal de vitesse de rotation, le nombre maximal des données pouvant être transmises étant déterminé à partir de la durée qui est nécessaire pour la transmission d'une information et à partir d'un temps qui correspond à la longueur de l'intervalle entre impulsions, **caractérisé en ce que** le nombre maximal des données pouvant être transmises dans un intervalle entre impulsions est adapté, par le fait que, en tant que temps qui correspond à la longueur de l'intervalle entre impulsions, une valeur est fixée qui résulte d'au moins un intervalle entre impulsions venant d'être mesuré, en tenant compte d'une valeur maximale de l'accélération (101, 102, 302, 303).

**2.** Procédé suivant la revendication 1, **caractérisé en ce que**, dans un intervalle entre impulsions, ce sont d'abord les données qui sont importantes à des vitesses élevées qui sont transmises.

**3.** Procédé suivant l'une des revendications 1 ou 2, **caractérisé en ce que** le nombre maximal des données étant transmises dans un intervalle entre impulsions est adapté d'une manière telle que la transmission de données soit terminée lorsque se présente l'impulsion suivante du signal de vitesse de rotation.

**4.** Procédé suivant la revendication 3, **caractérisé en ce que**, dans un protocole des données à transmettre, une adaptation du nombre maximal des données a lieu, par le fait que des données individuelles ou plusieurs données sont supprimées du protocole, **en ce que**, pour chaque nombre possible des données à transmettre, une durée minimale d'au moins un intervalle entre impulsions s'étant précédemment déroulé est déterminée, afin de pouvoir transmettre ce nombre de données et **en ce qu'**à l'aide de la durée déterminée dudit ou desdits intervalles considérés entre impulsions s'étant précédemment déroulés, il est déterminé combien de données peuvent être au maximum transmises (310, 311).

5. Agencement de circuit pour la mise en oeuvre d'un procédé suivant l'une des revendications 1 à 4, **caractérisé en ce que**, pour la mesure dudit ou desdits intervalles d'impulsion considérés, un signal d'un oscillateur (301) et un autre signal (302) sont envoyés à un compteur (303), l'autre signal (302) représentant l'apparition d'une impulsion du signal de vitesse de rotation.

Fig.1a

Fig.1b

Fig.2a

Fig.2b

9

I1

I2

Isensor

## Fig.3a

I1

I2

Isensor

## Fig.3b

I1

I2

Isensor

Threshold

I1

I2

Isensor

Threshold

## Fig.3c

Schieberegister
für Datenpulse

Fig. 4